**Europäisches Patentamt**

(19) **European Patent Office**

**Office européen des brevets**

(11) Veröffentlichungsnummer: **0 133 501**
**B1**

(12) **EUROPÄISCHE PATENTSCHRIFT**

(45) Veröffentlichungstag der Patentschrift:
01.07.87

(21) Anmeldenummer: **84108611.9**

(22) Anmeldetag: **20.07.84**

(51) Int. Cl.⁴: **H 02 H 3/33,** H 02 H 7/00

(54) **Fehlerstromschutzschalter.**

(30) Priorität: **03.08.83 DE 3328084**

(43) Veröffentlichungstag der Anmeldung:
**27.02.85 Patentblatt 85/9**

(45) Bekanntmachung des Hinweises auf die Patenterteilung:
**01.07.87 Patentblatt 87/27**

(84) Benannte Vertragsstaaten:
**AT BE CH DE FR GB IT LI**

(56) Entgegenhaltungen:
**EP-A-0 113 026**
**DE-A-2 123 948**
**FR-A-2 124 491**
**FR-A-2 520 164**
**GB-A-1 118 291**
**US-A-3 657 604**

(73) Patentinhaber: **Siemens Aktiengesellschaft Berlin
und München, Wittelsbacherplatz 2, D-8000
München 2 (DE)**

(72) Erfinder: **Stich, Karl- Heinz, Friedrich- Ebert-
Strasse 10, D-8400 Regensburg (DE)**

**Beschreibung**

Die Erfindung bezieht sich auf einen Fehlerstromschutzschalter, in dessen Sekundärkreis eines Summenstromwandlers mit einer bei 50 Hz ausreichenden Primärwindungszahl eine Auslöseeinrichtung nach dem Prinzip eines Haltemagneten angeordnet ist, wobei zwischen Summenstromwandler und Auslöseeinrichtung eine Gleichrichteranordnung eingeschaltet ist. Beim Einsatz gemäß EP-A1-0 113 026 (Art 54 (3) EPÜ) wird ein frequenzunabhängiger Schalter erzielt. Eine derartige Anordnung ist auch bekannt (FR-A-2 520 164), um verschiedenartige Fehlerströme zu erfassen. Der bekannte Fehlerstromschutzschalter soll bei Wechselfehlerströmen, bei pulsierenden Fehlerströmen und bei Gleichfehlerströmen ansprechen.

Fehlerstromschutzschalter, die mit einer üblichen Auslöseeinrichtung nach dem Prinzip eines Haltemagneten versehen sind, arbeiten in der Regel bei 50 Hz. Wenn solche Fehlerstromschutzschalter Verbraucher in Netzen mit anderer Frequenz schützen sollen, stört die Frequenzabhängigkeit des Haltemagnetsystems. Marktübliche Haltemagnete sind bei 50 Hz am empfindlichsten und da ihr Auslösebereich bei niedrigeren Frequenzen und besonders bei höheren Frequenzen zu höheren Auslöseströmen ansteigt, sind besondere Vorkehrungen erforderlich, um ein Auslösen bei geforderten Werten sicherzustellen. Durch die Gleichrichteranordnung zwischen Summenstromwandler und Auslöseeinrichtung wird ein handelsüblicher Fehlerstromschutzschalter mit einem Haltemagneten für einen Frequenzbereich von 16 2/3 Hz bis 30 kHz ertüchtigt, so daß man praktisch von einem frequenzunabhängigen Fehlerstromschutzschalter sprechen kann (EP-A1-0 113 026). Mit den üblichen Anpassungsmaßnahmen kam man dagegen im Einzelfall nur zu einer Einsatzmöglichkeit bis 400 Hz.

Der Erfindung liegt die Aufgabe zugrunde, den eingangs geschilderten frequenzunabhängigen Fehlerstromschutzschalter noch so zu verbessern, daß er auch durch in der Praxis vorkommende Spannungsspitzen nicht geschädigt wird.

Die Lösung der geschilderten Aufgabe besteht nach der Erfindung darin, daß parallel zur Auslöseeinrichtung nach dem Prinzip eines Haltemagneten ein elektronisches Ventil angeordnet ist, dessen Ansprechspannung knapp ooberhalb der Ansprechspannung der Auslöseeinrichtung liegt. Dadurch wird bei einer Auslöseeinrichtung nach dem Prinzip eines Haltemagneten zwar sichergestellt, daß bei hohen Spannungsspitzen der Haltemagnet nicht ummagnetisiert werden kann, daß er jedoch anspricht. Dadurch wird auch bei rauhen Betriebsbedingungen sichergestellt, daß der Fehlerstromschutzschalter langfristig störungsfrei arbeiten kann.

Um ein Ummagnetisieren von Haltemagneten zu vermeiden, ist es bekannt (FR-A-2 124 491) die von Fehlerströmen induzierten Stoßspannungen unterhalb der Auslöseschwelle des Haltemagneten kurzzuschließen, so daß keine Auslösung erfolgt. Beim erfindungsgemäßen Fehlerstromschutzschalter erfolgt dagegen eine Auslösung bei derartigen Spannungsspitzen, diese werden jedoch oberhalb einer Bandbreite über der Auslöseschwelle unschädlich gemacht.

Im einfachsten Fall kann das elektronische Ventil beim erfindungsgemäßen Fehlerstromschutzschalter aus zwei in Reihe geschalteten Dioden bestehen, wodurch man eine Spannung von etwa 2 x 0,7 V, also von 1,4 V erreicht. Die Ansprechspannung handelsüblicher Auslöseeinrichtungen nach dem Prinzip eines Haltemagneten liegt in der Regel geringfügig niedriger.

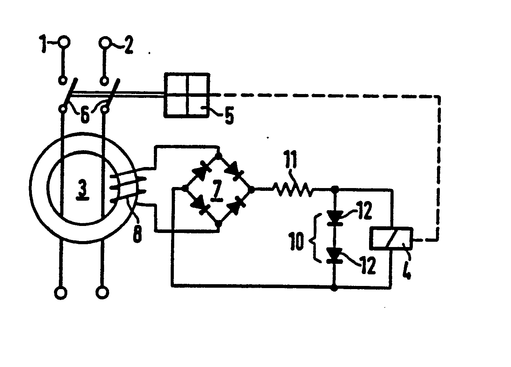

Die Erfindung soll nun anhand eines in der Zeichnung grob schematisch wiedergegebenen Ausführungsbeispiels näher erläutert werden:

Der Fehlerstromschutzschalter nach der Zeichnung überwacht die Leiter 1 und 2, die als Primärwindungen durch den Summenstromwandler 3 geführt sind. Im Sekundärkreis des Summenstromwandlers ist eine Auslöseeinrichtung 4 nach dem Prinzip eines Haltemagneten angeordnet. Sie steht in Wirkverbindung mit einem Schaltschloß 5, das die Schaltkontakte 6 öffnen kann. Im Sekundärkreis ist zwischen Summenstromwandler 3 und Auslöseeinrichtung 4 eine Gleichrichteranordnung 7 eingeschaltet. Im Ausführungsbeispiel ist die Gleichrichteranordnung 7 als Brückengleichrichter ausgebildet, an dessen einem Brückenzweig die Sekundärwicklung 8 und an dessen anderem Brückenzweig die Auslöseeinrichtung 4 angeschlossen ist. Die auf der Sekundärseite des Summenstromwandlers gleichgerichtete Spannung weist keine Frequenzabhängigkeit auf.

Parallel zur Auslöseeinrichtung 4 ist ein elektronisches Ventil 10 angeordnet, dessen Ansprechspannung knapp oberhalb der Ansprechspannung der Auslöseeinrichtung liegt. Im Ausführungsbeispiel besteht das elektronische Ventil aus zwei in Reihe geschalteten Dioden. Bei einer Diodenspannung von 0,7 Volt steht damit eine Gesamtspannung von 1,4 Volt zur Verfügung, die knapp oberhalb der Ansprechspannung der Auslöseeinrichtung nach dem Prinzip eines Haltemagneten liegt. Zum Schutz der Gleichrichteranordnung 7 bei einem Kurzschluß im Auslösekreis im Bereich der Auslöseeinrichtung ist es zweckmäßig, einen strombegrenzenden ohmschen Widerstand 11 zwischen der Gleichrichteranordnung und dem elektronischen Ventil anzuordnen.

Die erfindungsgemäße Ausbildung des eingangs geschilderten Fehlerstromschutzschalters ermöglicht verständlicherweise weitere Einsatzgebiete: So kann im Sekundärkreis zwischen der Sekundärwicklung 8 und der Gleichrichteranordnung 7 ein Kondensator angeordnet werden, der in an sich bekannter Weise auf die Frequenz der Spannung zumindest in etwa resonant abgestimmt ist, die ein pulsierender Gleichstrom auf der Sekundärseite induziert, um dadurch auch bei Fehlerströmen mit Gleichstromkomponenten auslösen zu können.

**Patentansprüche**

1. Fehlerstromschutzschalter, in dessen Sekundärkreis eines Summenstromwandlers (3) mit einer bei 50 Hz ausreichenden Primärwindungszahl eine Auslöseeinrichtung (4) nach dem Prinzip eines Haltemagneten angeordnet ist, wobei zwischen Summenstromwandler (3) und Auslöseeinrichtung (4) eine Gleichrichteranordnung (7) eingeschaltet ist, dadurch gekennzeichnet, daß parallel zur Auslöseeinrichtung (4) nach dem Prinzip eines Haltemagneten ein elektronisches Ventil (10) angeordnet ist, dessen Ansprechspannung knapp oberhalb der Ansprechspannung der Auslöseeinrichtung (4) liegt.

2. Fehlerstromschutzschalter nach Anspruch 1, dadurch gekennzeichnet, daß das elektronische Ventil (10) aus zwei in Reihe geschalteten Dioden (12) besteht.

**Claims**

1. A leakage current fault interrupter, in which the secondary circuit of a sum current transformer (3) having a sufficient number of primary windings to be adequate at 50 Hz contains a circuit breaker (4) which operates in accordance with the holding magnet principle, a rectifier arrangement (7) being connected between the sum current transformer (3) and the circuit breaker (4), characterised in that the circuit breaker (4) which operates in accordance with the holding magnet principle is arranged in parallel with an electronic valve (10), whose response voltage lies just above the response voltage of the circuit breaker (4).

2. A leakage current fault interrupter as claimed in Claim 1, characterised in that the electronic valve (10) consists of two series-connected diodes (12).

**Revendications**

1. Disjoncteur de protection contre les courants de défaut, possédant un transformateur de courant totalisateur (3) avec un nombre de spires primaires qui suffit à 50 Hz, dont le circuit secondaire contient un dispositif de déclenchement (4) selon le principe d'un aimant de maintien, avec interposition d'un dispositif redresseur (7) entre le transformateur de courant totalisateur (3) et le dispositif de déclenchement (4), caractérisé en ce qu'une valve électronique (10) dont la tension de réponse est juste au-dessus de la tension de réponse du dispositif de déclenchement (4), est connectée en parallèle avec le dispositif de déclenchement (4) selon le principe d'un aimant de maintien.

2. Disjoncteur selon la revendication 1, caractérisé en ce que la valve électronique (10) est formée de deux diodes (12) connectées en série.